# EUROPEAN PATENT SPECIFICATION

(11) **EP 0 786 465 B1**
(45) Date of publication and mention of the grant of the patent: **31.07.2002**
(21) Application number: 97101287.7
(22) Date of filing: 28.01.1997
(51) Int. Cl.: C07F 7/14

(54) **Aldehydes as accelerators for hydrosilation**
Aldehyde als Beschleuniger für Hydrosilylierungsreaktionen
Aldéhydes comme promoteurs de réactions d'hydrosilylation

(30) Priority: 29.01.1996 US 593383
(43) Date of publication of application: 30.07.1997
(73) Proprietor: DOW CORNING CORPORATION, Midland, Michigan 48686-0994 (US)
(72) Inventor: Bank, Howard Marvin, Freeland, Michigan 48623 (US); Decker, Gary Thomas, Midland, Michigan 48642 (US)
(74) Representative: Spott, Gottfried, Dr.

(56) References cited:
- EP-A- 0 731 104
- US-A- 3 220 972
- US-A- 5 424 470

## Description

The present invention is a hydrosilation process where a silicon hydride is reacted with an unsaturated component in the presence of a platinum catalyst and an aldehyde accelerator. Our aldehyde accelerators are especially useful for facilitating the hydrosilation of unsaturated components where the unsaturation is in the internal portion of the components structure, for example, as in cyclopentene and cyclohexene.

It is known in the art to produce organosilicon compounds by reacting a silicon hydride compound with an unsaturated organic compound in the presence of a catalyst. This reaction is typically referred to as hydrosilation or hydrosilylation. Normally, the catalyst is platinum metal on a support, a platinum compound usually in a solvent or a platinum complex.

U.S. Patent 2,823,218 teaches a method for production of organosilicon compounds by reacting Si-H with a compound containing aliphatic carbon atoms linked by multiple bonds in the presence of chloroplatinic acid. Likewise, U.S. Patent 3,220,972 describes a similar process where the catalyst is a reaction product of chloroplatinic acid. Also, this latter patent suggests the catalyst may be a complex of PtCl₂ and an ether or aldehyde derived from octyl alcohol.

One of the problems known in the art about hydrosilation reactions is the de-activation of the catalyst prior to reaction completion. One method for reactivation of catalyst has been to expose the reaction mixture to oxygen. For example, U.S. Patent 4,578,497 discloses the use of an oxygenated platinum catalyst for use in hydrosilating alkylsilanes. U.S. Patent 5,359,111 claims a method for controlling hydrosilation reactions by controlling the concentration of oxygen in the reaction mixture, relative to platinum that is also present.

In addition to the de-activation problem of the platinum catalyst, hydrosilation processes in the art are not effective in hydrosilating internal unsaturated bonds in organic molecules. We have unexpectedly found that certain aldehydes act as accelerators for platinum catalyzed hydrosilation processes. These aldehyde accelerators are surprisingly effective in facilitating the hydrosilation of internal unsaturated bonds of organic molecules.

U.S. Patent 5,424,470 reveals a hydrosilation process where silicon hydride is reacted with an unsaturated component in the presence of platinum catalyst and an unsaturated ketone accelerator.

U.S. Patent 5,449,802 shows a hydrosilation process where silicon hydride is reacted with an unsaturated component in the presence of platinum catalyst and an accelerator selected from acetylenic alcohols, silated acetylenic alcohols and acetylenic ethers.

We claim a hydrosilation process where a silicon hydride is reacted with an unsaturated component in the presence of a platinum catalyst and an aldehyde accelerator. This hydrosilation process comprises contacting (A) a silicon hydride described by formula R¹ₐH_{b}SiX_{4-a-b} (1) where each R¹ is independently selected from alkyl groups comprising one to 20 carbon atoms; cycloalkyls comprising four to 12 carbon atoms and aryls; each X is independently selected from halogen atom or organooxy radicals described by formula -OR¹, where R¹ is as previously described, a=0 to 3, b=1 to 3 and a+b=1 to 4; and (B) an unsaturated reactant selected from a group consisting of (i) substituted or unsubstituted organic compounds containing non-aromatic, unsaturated carbon-carbon bonds, (ii) silicon compounds comprising substituted or unsubstituted organic substituents containing non-aromatic, unsaturated carbon-carbon bonds, and (iii) mixtures of (i) and (ii); in the presence of a platinum catalyst selected from platinum compounds or platinum complexes and an aldehyde accelerator, provided that if the unsaturated component (B) represents an alkene having at least four carbon atoms, the substituent R¹ of the silicon hydride is a methyl group.

The contacting of silicon hydride with the unsaturated component is effected in standard type reactors for conducting hydrosilation processes. The contact and reaction may be successfully run as a continuous, semi-continuous or batch process.

Silicon hydrides useful in the present process are described by formula (1), where each R¹ is independently selected from a group consisting of alkyls comprising one to 20 carbon atoms, cycloalkyls comprising four to 12 carbon atoms and aryls; a=0 to 3, b=1 to 3 and a+b=1 to 4. R¹ is thus a substituted or unsubstituted alkyl, cycloalkyl or aryl as described.

In formula (1) it is preferred that each R¹ is independently selected from alkyls comprising one to six carbon atoms. Even more preferred is when each R¹ is methyl.

Also in formula (1), each X is independently selected from halogen atoms or organooxy radicals described by formula -OR¹, where R¹ is as previously described. Preferred is when X is chlorine.

Examples, of silicon hydrides of formula (1) which are useful in the present process include trimethylsilane, dimethylsilane, triethylsilane, dichlorosilane, trichlorosilane, methyldichlorosilane, dimethylchlorosilane, ethyldichlorosilane, cyclopentyldichlorosilane, methylphenylchlorosilane, (3,3,3-trifluoropropyl)-dichlorosilane and methylmethoxychlorosilane. A preferred silicon hydride is selected from methyldichlorosilane or dichlorosilane.

The silicon hydride is contacted with an unsaturated component selected from a group consisting of (i) substituted or unsubstituted organic compounds containing non-aromatic, unsaturated carbon-carbon bonds, (ii) silicon compounds comprising substituted or unsubstituted organic substituents containing non-aromatic, unsaturated carbon-carbon bonds, and (iii) mixtures of (i) and (ii). For this invention, "unsaturated" means that the compound contains at least one carbon-carbon double bond.

More specific examples of the unsaturated components of the present process include unsubstituted cycloalkene compounds comprising at least four carbon atoms, substituted cycloalkene compounds comprising at least four carbon atoms, linear alkene compounds comprising two to 30 carbon atoms, branched alkene compounds comprising four to 30 carbon atoms and mixtures of two or more of any of the above.

The useful substituted or unsubstituted cycloalkene compounds are those containing one or more unsaturated carbon-carbon bonds in the ring. The unsubstituted cycloalkene compounds are, for example, cyclobutene, cyclopentene, cyclohexene, cycloheptene, cyclooctene, cyclopentadiene, 1,3-cyclohexadiene and 1,3,5-cycloheptatriene. Substituted unsaturated compounds are 3-methylcyclopentene, 3-chlorocyclobutene, 4-phenylcyclohexene and 3-methylcyclopentadiene. The preferred cycloalkene compounds are cyclohexene and cyclopentene.

Other unsaturated organic compounds in the present process are linear or branched alkenyl compounds including, for example, compounds with terminal unsaturation such as 1-hexene and 1,5-hexadiene, compounds with internal unsaturation such as trans-2-hexene and unsaturated aryl containing compounds such as styrene and α-methylstyrene.

The unsaturated components may also comprise halogen or oxygen in the form of acids, anhydrides, alcohols, esters, ethers and nitrogen. Mixtures of two or more of the above described unsaturated organic compounds may also be used in our present process.

The unsaturated organic compounds comprising halogen may include, for example, vinyl chloride, allyl chloride, allyl bromide, allyl iodide, methallyl chloride, trichloroethylene, tetrachloroethylene, tetrafluoroethylene, chloroprene, vinyldiene chloride and dichlorostyrene.

Suitable unsaturated organic compounds comprising oxygen include, for example, ethers such as allyl or vinyl ethers; alcohols such as allyl alcohol (vinyl carbinol), methylvinylcarbinol and ethynyldimethyl-carbinol; acids such as acrylic, methacrylic, vinylacetic, oleic, sorbic and linolenic; and esters such as vinyl acetate, allyl acetate, butenyl acetate, allyl stearate, methylacrylate, ethylcrotonate, diallyl succinate and diallyl phthalate. Suitable nitrogen containing unsaturated organic compounds include indigo, indole, acrylonitrile and allyl cyanide.

Specifically included within our definition of unsaturated organic compounds are those substituted by organofunctional moieties such as

CH₂=CHCH₂OC(O)C(CH₃)=CH₂,

CH₂=CHCH₂NHCH₂CH₂NH₂,

CH₂=CHCH₂NH₂, CH₂=CHCH₂OCH₂

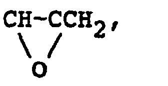

CH₂=CHCH₂SH

CH₂=CHSi{O(CH₂)₂OCH₃}₃ and

CH₂=CHCH₂NHCH₂CH₂NHCH₂(C₆H₄)CH=CH₂.

Our unsaturated organic compound can be a silicon compound comprising substituted or unsubstituted organic substituents as described by, for example, the following formulas (CH₂=CH(CH₂)_{g})ₕR¹ᵢSi(OR¹)₄₋ₕ₋ᵢ and (CH₂=CH(CH₂)_{g})ₕR¹ᵢSiCl₄₋ₕ₋ᵢ, where R¹ is as previously described, g=0 to 12, h=1 to 3, i=0 to 3 and h+i=1 to 4.

Prior to contact of the silicon hydride with the unsaturated component, it may be preferable to treat or purify this component. Methods useful for treating or purifying such components are those known in the art for treating or purifying unsaturated organic compounds and include distillation or treatment with an adsorbent such as activated alumina or molecular sieves.

The relative amounts of silicon hydride and unsaturated reactant used in our claimed process is varied within wide limits. Although one unsaturated carbon-carbon linkage per silicon-bonded hydrogen atom is stoichiometric, there is no requirement that our process be solely run under stoichiometric conditions. Generally, it is preferred that our process be run with a stoichiometric excess of silicon hydride. Preferred is when the process is run at 0.1 to ten percent of stoichiometric excess of the silicon hydride. However, in some situations for safety reasons, it may be preferred to run the process with an excess of unsaturated component, for example, when the silicon hydride is dichlorosilane.

The silicon hydride and unsaturated component are contacted in the presence of a platinum catalyst selected from platinum compounds and platinum complexes. Any platinum containing material which effects the reaction between the silicon hydride and an unsaturated carbon-carbon bond of the unsaturated organic compound is useful in our invention. Examples of useful platinum catalysts are described, for example, in U.S. Patents 4,578,497, 3,220,972 and 2,823,218.

The platinum catalyst can be, for example, chloroplatinic acid, chloroplatinic acid hexahydrate, Karstedt's catalyst (i.e. a complex of chloroplatinic acid with sym-divinyltetramethyldisiloxane), dichloro-bis(triphenylphosphine)platinum(II), cis-dichloro-bis(acetonitrile)-platinum(II), dicarbonyldichloroplatinum(II), platinum chloride and platinum oxide.

A preferred platinum catalyst is selected from the group consisting of chloroplatinic acid, chloroplatinic acid hexahydrate and platinum vinylsiloxane complexes such as a neutralized complex of chloroplatinic acid or platinum dichloride with sym-divinyltetramethyldisiloxane.

Generally, those concentrations of platinum catalyst which provide at least one mole of platinum metal per billion moles of unsaturated carbon-carbon bonds added by the unsaturated component are useful in the present process. Concentrations of platinum catalyst providing as high as one mole of platinum metal per one thousand moles of unsaturated carbon-carbon bonds from the unsaturated component are more useful. Higher concentrations of platinum may be used if desired. A preferred concentration of platinum catalyst provides one to 1000 moles of platinum metal per 1 X 10⁶ moles of non-aromatic unsaturated carbon-carbon bonds from the unsaturated reactant.

The platinum catalyst may be dissolved in a solvent for ease of handling and to facilitate measuring the small amounts typically needed. Suitable solvents include, for example, non-polar hydrocarbon solvents such as benzene, toluene and xylene; and polar solvents such as alcohols, ketones, glycols and esters.

Our present process is carried out in the presence of an aldehyde accelerator. This accelerator is, for example, those aldehydes described by formula R²HC=O, where R² is a monovalent hydrocarbon or organooxy radical comprising one to 20 carbon atoms. R² is selected from the group consisting of an aryl, aralkyl, aralkenyl, cycloalkyl, cycloalkenyl, alkyl and alkenyl. R² is, for example, an aryl group such as phenyl, tolyl, naphthyl, mesityl, xylyl, anisyl, anthryl and methoxyphenyl; an aralkyl group such as benzyl or alpha-phenyl ethyl; an aralkenyl group such as beta-phenyl ethenyl; a cycloalkyl group comprising four to 20 carbon atoms such as cyclopentyl or cyclohexyl; a cycloalkenyl group comprising four to 20 carbon atoms such as cyclopentenyl or cyclohexenyl; an alkyl group comprising one to twenty carbon atoms such as methyl, ethyl, t-butyl, pentyl, octyl and eicosyl; and an alkenyl group comprising two to 20 carbon atoms such as vinyl or pentenyl.

Examples of useful aldehyde accelerators are benzaldehyde; mesitaldehyde; the ortho, meta and para-isomers of anisaldehyde; 9-anthraldehyde; 2-naphthaldehyde; the ortho, meta and para-isomers of tolualdehyde; cyclohexane-carboxaldehyde; 1,2,3,6-tetrahydrobenzaldehyde; 2,4-dimethoxybenzaldehyde; 2-phenylpropionaldehyde; amylcinnamaldehyde, actyl aldehyde and trans-cinnamaldehyde. A preferred aldehyde accelerator for use in our claimed process is benzaldehyde.

An effective concentration of this accelerator is added to the present process, where an effective concentration is one that facilitates initiation of the reaction between the silicon hydride and the unsaturated organic compound; accelerates the rate of the reaction or reduces the loss of reactivity of the catalyst in the process. An effective concentration of the accelerator is generally within a range of 0.01 to 20 weight percent of the weight of the unsaturated component. Preferred is when the accelerator is 0.1 to ten weight percent of the weight of the unsaturated component. The accelerator is added to the process as a pre-mix with the platinum catalyst or it is added separately.

The temperature at which our process is conducted is usually within a range of -10°C. to 270°C. It is preferred to conduct the process at a temperature of 15°C. to 170°C. The most preferred temperature is within a range of 30°C. to 150°C.

In those situations where the silicon hydride is a dihydrogendihalosilane, that is where the value for subscript b is two, it may be desirable to run our process as a two step process. In the first step, the silicon hydride and unsaturated component are contacted in the presence of the platinum catalyst and aldehyde accelerator at a temperature which favors the formation of a mono-adduct from the reaction of the silicon hydride with the unsaturated component. In a second step, the temperature of the process is raised to a higher temperature that favors formation of the di-adduct from the same reaction. Surprisingly, the conduct of the first step at a lower temperature reduces disproportionation of the silicon hydride and thereby reduces byproducts. An example of such a two-step process is provided in the following examples. Suitable temperature ranges for each step will depend upon the reactants and are easily determined by those skilled in the art.

### Example 1

The ability of aldehydes to act as accelerators for the hydrosilation reaction of cyclohexene with methyldichlorosilane by platinum catalyst was evaluated. A stock mixture comprising seven percent molar excess of methyldichlorosilane in cyclohexene was prepared. The cyclohexene was treated with 13 X molecular sieves prior to preparation of the mixture. Then 6 x 10⁻⁵ moles of platinum metal, as a platinum divinylsiloxane complex, per mole of cyclohexene were added to the stock mixture. Two milliliter aliquots of the stock solution were transferred to argon-purged glass tubes and the aldehyde compounds of Table 1 were added to the tubes at the concentrations also described in Table 1. The tubes were heat sealed under argon purge and heated at 80°C. for three hours. After three hours, the tubes were cooled and the contents were analyzed by gas chromatography using a thermal conductivity detector (GC-TC). The results of this analysis are reported in Table 1 as the normalized area percent of (cyclohexyl)methyldichlorosilane (MeC_{H}SiCl₂) under the GC-TC trace minus the area of the cyclohexene as 100 percent.

**Table 1**

| Aldehydes as Accelerators For Hydrosilation of Cyclohexene with Methyldichlorosilane | | |
|---|---|---|
| Aldehyde | Conc. | GLC Area % MeC_{H}SiCl₂ |
| Blank | - | 37.2 |
| Blank | - | 41.2 |
| Mesitaldehyde | 0.4 Vol.% | 98.6 |
| 9-Anthaldehyde | 0.9 Wt.% | 97.5 |
| 2-Phenylpropionaldehyde | 0.4 Vol.% | 97.5 |
| 2-Naphthaldehyde | 0.5 Wt.% | 97.4 |
| m-Anisaldehyde | 0.4 Vol.% | 97.3 |
| Cyclohexane-carboxaldehyde | 0.4 Vol.% | 96.9 |
| Amylcinnamaldehyde | 0.4 Vol.% | 96.2 |
| 1,2,3,6-Tetrahydrobenzaldehyde | 0.4 Vol.% | 95.4 |
| Benzaldehyde | 0.4 Vol.% | 94.9 |
| 2,4-Dimethoxybenzaldehyde | 1.6 Wt.% | 93.4 |
| trans-Cinnamaldehyde | 0.4 Vol.% | 88.1 |
| o-Tolualdehyde | 0.4 Vol.% | 85.7 |
| Octyl aldehyde | 0.8 Vol.% | 67.4 |
| 5-Ethyl-2-furaldehyde | 0.4 Vol.% | 4.0 |

### Example 2

The ability of aldehydes to accelerate the reaction of dichlorosilane with cyclopentene in the presence of a platinum catalyst was evaluated. A stock mixture was prepared in an argon purged and blanketed bottle. The stock mixture comprised 15 weight percent of dichlorosilane in cyclopentene. Next, 7 x 10⁻⁴ moles of platinum metal as a platinum divinylsiloxane complex, per mole of dichlorosilane were added to the stock mixture. Two milliliter aliquots of the catalyzed stock mixture were transferred to argon-purged glass tubes and the aldehydes of Table 2 were added to the tubes at the concentrations also described in Table 2. The tubes were heat sealed under argon purge and heated at 120°C. for one hour. After one hour, the tubes were cooled and the contents were analyzed by GC-TC. The results are presented in Table 2 as the area percent of cyclopentyldichlorosilane (CₚHSiCl₂) or dicyclopentyldichlorosilane ((Cₚ)₂SiCl₂) under the GC-TC trace.

**Table 2**

| Aldehydes as Accelerators For Hydrosilation of Cyclopentene With Dichlorosilane | | | |
|---|---|---|---|
| | | GC-TC Area% | |
| Aldehyde | Conc. | CₚHSiCl₂ | (Cₚ)₂SiCl₂ |
| Blank | - | 11.7 | 0.3 |
| m-Anisaldehyde | 1.0 Vol% | 13.5 | 3.8 |
| Cyclohexane-carboxaldehyde | 1.0 Vol% | 18.3 | 0.0 |
| 2,4-Dimethoxybenzaldehyde | 0.9 Wt% | 15.6 | 0.0 |
| trans-Cinnamaldehyde | 1.0 Vol% | 19.0 | 0.0 |
| 9-Anthraldehyde | 1.1 Wt% | 20.2 | 0.0 |
| 2-Phenylpropionaldehyde | 1.0 Vol% | 19.3 | 0.0 |
| Benzaldehyde | 1.0 Vol% | 1.0 | 17.7 |

### Example 3

The effect of benzaldehyde and dichlorosilane concentrations on the platinum catalyzed hydrosilation of cyclopentene with dichlorosilane were evaluated. Mixtures of dichlorosilane and cyclopentene were prepared in argon purged and blanketed bottles. The weight percent of dichlorosilane in each mixture is given in Table 3. A platinum divinylsiloxane complex was added to the mixture to provide the concentrations of platinum listed in Table 3. The concentration of platinum is described as the moles of platinum metal per mole of dichlorosilane present in the mixture. Two milliliter aliquots of the catalyzed mixture were transferred to argon-purged glass tubes and benzaldehyde was added at the concentrations of Table 3 (BZAL Conc.). The tubes were heat sealed under argon purge and heated at 120°C. for one hour. After one hour, the tubes were cooled and analyzed by GC-TC. The results are presented in Table 3 as the area percent of cyclopentyldichlorosilane (CₚHSiCl₂) or dicyclopentyldichlorosilane ((Cp)₂SiCl₂) under the GC-TC trace.

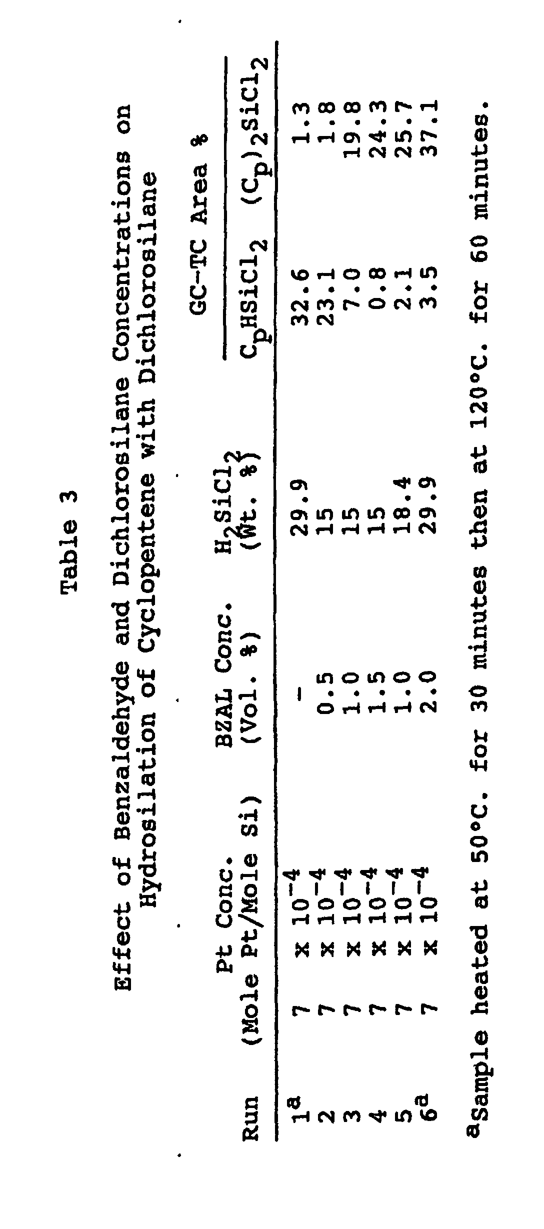

### Example 4

The effect of aldehyde structure and temperature on the hydrosilation of cyclopentene with dichlorosilane was evaluated. Stock mixtures containing either 13 weight percent or 15 weight percent of dichlorosilane in cyclopentene as described in Table 4 were prepared in argon purged and blanketed bottles. Then, 7 x 10⁻⁴ moles of platinum metal, as a platinum divinylsiloxane complex, per mole of dichlorosilane were added to the bottle. Two milliliter aliquots of the catalyzed mixture were transferred to argon-purged glass tubes and the aldehydes of Table 4 were added to the tubes at the concentrations also described in Table 4. The tubes were heat sealed and heated for one hour at the temperatures described in Table 4. After one hour, the tubes were cooled and the contents were analyzed by GC-TC. The results are presented in Table 2 as the area percent of cyclopentyldichlorosilane (CₚHSiCl₂) or dicyclopentyldichlorosilane ((Cₚ)₂SiCl₂) under the GC-TC trace.

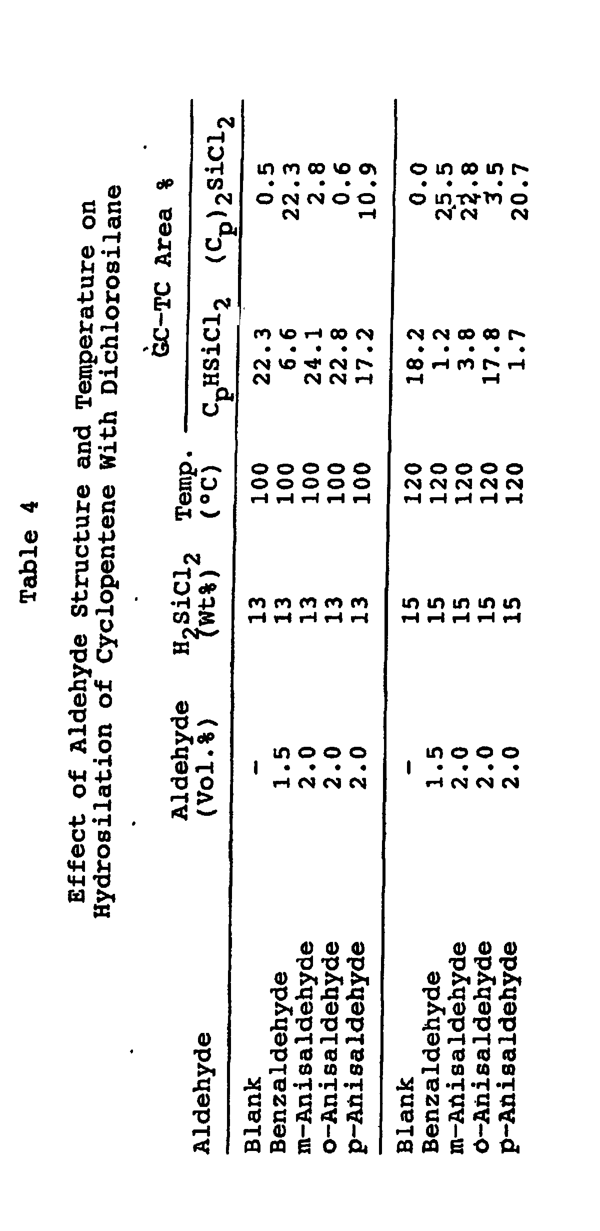

### Example 5

The ability of benzaldehyde to accelerate the reaction of dichlorosilane with cyclopentene in the presence of a platinum catalyst using a two-step process was evaluated. A stock mixture comprising 28.5 weight percent of dichlorosilane in cyclopentene was prepared in an argon purged and blanketed bottle. Two milliliter aliquots of this stock mixture were placed in argon purged glass tubes containing a sufficient amount of a platinum divinylsiloxane complex to provide a final platinum metal concentration of 7 X 10⁻⁴ moles per mole of dichlorosilane. Where indicated for benzaldehyde or for reference purposes 2-methyl-3-butyn-2-ol (MBO), was added to the tubes as an accelerator. The concentration of accelerator was 2 volume percent, based upon the total volume present in the tube. The tubes were cooled in an isopropyl alcohol (IPA)/dry ice bath and heat sealed under an argon blanket. In the first-step, the tubes where heated at 50°C. for 30 minutes. In the second step, the tubes were heated at 120°C. for 60 minutes. The tubes were cooled and the contents were analyzed by GC-TC. The results are reported in Table 5 as the percent area under the GC-TC trace.

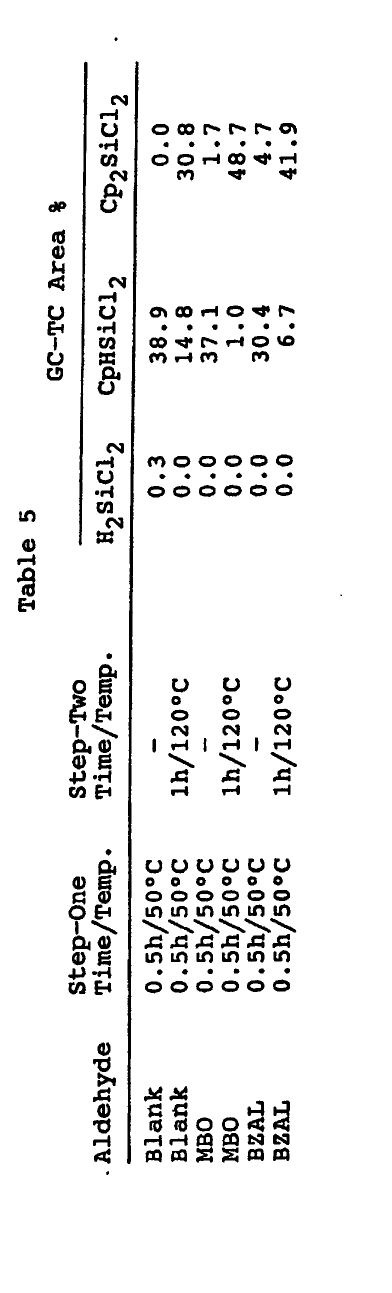

## Claims

1. A hydrosilation process comprising contacting
(A) a silicon hydride described by formula R¹ₐH_{b}SiX_{4-a-b} where each R¹ is independently selected from the group consisting of alkyls comprising one to 20 carbon atoms, cycloalkyls comprising four to 12 carbon atoms and aryls; each X is independently selected from halogen atom or organooxy radicals described by formula -OR¹, where R¹ is as previously described, a=0 to 3, b=1 to 3 and a+b=1 to 4; and
(B) an unsaturated component selected from the group consisting of (i) substituted or unsubstituted organic compounds containing non-aromatic, unsaturated carbon-carbon bonds, (ii) silicon compounds comprising substituted or unsubstituted organic substituents containing non-aromatic, unsaturated carbon-carbon bonds, and (iii) mixtures of (i) and (ii); in the presence of a platinum catalyst selected from platinum compounds or platinum complexes and an aldehyde accelerator,
provided that if the unsaturated component (B) represents an alkene having at least four carbon atoms, the substituent R¹ of the silicon hydride is a methyl group.

2. A process according to claim 1 where the silicon hydride is selected from methyldichlorosilane or dichlorosilane.

3. A process according to claim 1 where the unsaturated component is selected from cyclohexene or cyclopentene.

4. A process according to claim 1 where the unsaturated component is contacted with a 0.1 to ten percent stoichiometric excess of the silicon hydride.

5. A process according to claim 1 where the platinum catalyst is selected from the group consisting of chloroplatinic acid, chloroplatinic acid hexahydrate and platinum vinylsiloxane complexes.

6. A process according to claim 1 where the concentration of the platinum catalyst is one to 1000 moles of platinum metal per 1 X 10⁶ moles of non-aromatic unsaturated carbon-carbon bonds provided to the process by the unsaturated component.

7. A process according to claim 1 where concentration of the aldehyde accelerator is within a range of 0.01 to 20 weight percent of the weight of the unsaturated component.

8. A process according to claim 1 where the silicon hydride is contacted with the unsaturated component at a temperature within a range of -10°C. to 270°C.

9. A process according to claim 1 where the aldehyde accelerator is selected from the group consisting of mesitaldehyde, 9-anthaldehyde, 2-phenylpropionaldehyde, 2-naphthaldehyde, m-anisaldehyde, o-anisaldehyde, p-anisaldehyde, cyclohexane-carboxaldehyde, amylcinnamaldehyde, 1,2,3,6-tetrahydrobenzaldehyde, benzaldehyde, 2,4-dimethoxybenzaldehyde, transcinnamaldehyde, o-,m- or p-tolualdehyde and octyl aldehyde.

10. A process according to claim 1 where the silicon hydride is methyldichlorosilane, the unsaturated component is cyclohexene, the platinum catalyst is a platinum vinylsiloxane complex and the aldehyde accelerator is benzaldehyde.

11. A process according to claim 1 where the silicon hydride is dichlorosilane, the unsaturated component is cyclopentene, the platinum catalyst is a platinum vinylsiloxane complex and the aldehyde accelerator is benzaldehyde.

12. A process according to claim 1 where the silicon hydride is a dihydrogendihalosilane and the process is run as a two-step process with the first-step being at a temperature which favors formation of a mono-adduct from the reaction of silicon hydride and unsaturated component and the second-step being at a higher temperature which favors formation of a di-adduct from the reaction of silicon hydride and unsaturated component.

## Patentansprüche

1. Hydrosilierungsverfahren, das umfasst das Inkontaktbringen
(A) eines Siliciumhydrids der Formel R¹ₐH_{b}SiX_{4-a-b}, worin jeder Rest R¹ unabhängig ausgewählt wird aus der Gruppe, die besteht aus Alkylen mit 1 bis 20 Kohlenstoffatomen; Cycloalkylen mit 4 bis 12 Kohlenstoffatomen und Arylen; jeder Rest X unabhängig ausgewählt wird aus Halogenatomen oder Organooxy-Resten der Formel -OR¹, worin R¹ wie oben definiert ist, a = 0 bis 3, b = 1 bis 3 und a + b = 1 bis 4, mit
(B) einer ungesättigten Komponente, ausgewählt aus der Gruppe, die besteht aus (i) substituierten oder unsubstituierten organischen Verbindungen, die nicht-aromatische, ungesättigte Kohlenstoff-Kohlenstoff-Bindungen enthalten, (ii) Silicium-Verbindungen, die substituierte oder unsubstituierte organische Substituenten umfassen, die nicht-aromatische, ungesättigte Kohlenstoff-Kohlenstoff-Bindungen enthalten, und (iii) Mischungen von (i) und (ii);
in Gegenwart eines Platin-Katalysators, ausgewählt aus Platin-Verbindungen oder Platin-Komplexen, und eines Aldehyd-Beschleunigers,
mit der Maßgabe, dass dann, wenn die ungesättigte Verbindung (B) ein Alken mit mindestens vier Kohlenstoffatomen darstellt, der Substituent R¹ des Siliciumhydrids eine Methylgruppe ist.

2. Verfahren nach Anspruch 1, worin das Siliciumhydrid ausgewählt wird aus Methyldichlorosilan oder Dichlorosilan.

3. Verfahren nach Anspruch 1, worin die ungesättigte Verbindung ausgewählt wird aus Cyclohexen oder Cyclopenten.

4. Verfahren nach Anspruch 1, worin die ungesättigte Komponente mit einem 0,1 bis 10 %igen stöchiometrischen Überschuss an Siliciumhydrid in Kontakt gebracht wird.

5. Verfahren nach Anspruch 1, worin der Platin-Katalysator ausgewählt wird aus der Gruppe, die besteht aus Chloroplatin(IV)säure, Chloroplatin(IV)säure-hexahydrat und Platin-Vinylsiloxan-Komplexen.

6. Verfahren nach Anspruch 1, worin die Konzentration des Platin-Katalysators 1 bis 1000 mol Platinmetall pro 1 x 10⁶ mol nicht-aromatische ungesättigte Kohlenstoff-Kohlenstoff-Bindungen, eingeführt durch die ungesättigte Komponente, beträgt.

7. Verfahren nach Anspruch 1, worin die Konzentration des Aldehyd-Beschleunigers innerhalb eines Bereiches von 0,01 bis 20 Gew.-%, bezogen auf das Gewicht der ungesättigten Komponente, liegt.

8. Verfahren nach Anspruch 1, worin das Siliciumhydrid mit der ungesättigten Komponente bei einer Temperatur innerhalb eines Bereiches von -10 bis 270°C in Kontakt gebracht wird.

9. Verfahren nach Anspruch 1, worin der Aldehyd-Beschleuniger ausgewählt wird aus der Gruppe, die besteht aus Mesitaldehyd, 9-Anthaldehyd, 2-Phenylpropionaldehyd, 2-Naphthaldehyd; m-Anisaldehyd, o-Anisaldehyd, p-Anisaldehyd, Cyclohexan-carboxaldehyd; Amylcinnamaldehyd, 1,2,3,6-Tetrahydrobenzaldehyd; Benzaldehyd, 2,4-Dimethoxybenzaldehyd, trans-Cinnamaldehyd, o-, m- oder p-Tolualdehyd und Octylaldehyd.

10. Verfahren nach Anspruch 1, worin das Siliciumhydrid Methyldichlorosilan ist, die ungesättigte Komponente Cyclohexen ist, der Platin-Katalysator ein Platin-Vinylsiloxan-Komplex ist und der Aldehyd-Beschleuniger Benzaldehyd ist.

11. Verfahren nach Anspruch 1, worin das Siliciumhydrid Dichlorosilan ist, die ungesättigte Komponente Cyclopenten ist, der Platin-Katalysator ein Platin-Vinylsiloxan-Komplex ist und der Aldehyd-Beschleuniger Benzaldehyd ist.

12. Verfahren nach Anspruch 1, worin das Siliciumhydrid ein Dihydrogendihalogensilan ist und das Verfahren als Zwei-Stufen-Verfahren durchgeführt wird, wobei die erste Stufe bei einer Temperatur durchgeführt wird, welche die Bildung eines Monoaddukts aus der Reaktion des Siliciumhydrids mit der ungesättigten Komponente fördert, und die zweite Stufe bei einer höheren Temperatur durchgeführt wird, welche die Bildung eines Diaddukts aus der Reaktion zwischen dem Siliciumhydrid und der ungesättigten Komponente fördert.

## Revendications

1. Procédé d'hydrosilylation comprenant la mise en contact (A) d'un hydrure de silicium décrit par la formule R¹ₐH_{b}SiX_{4-a-b} où chaque R¹ est choisi indépendamment dans le groupe consistant en les alkyles comprenant 1 à 20 atomes de carbone, les cycloalkyles comprenant 4 à 12 atomes de carbone et les aryles ; chaque X est choisi indépendamment parmi un atome d'halogène et les radicaux organooxy décrits par la formule -OR¹ où R¹ est décrit comme précédemment, a = 0 à 3, b = 1 à 3 et a + b = 1 à 4 ; et
(B) un composant insaturé choisi dans le groupe consistant en (i) les composés organiques substitués ou non substitués contenant des liaisons carbone-carbone insaturées non aromatiques, (ii) les composés du silicium comprenant des substituants organiques substitués ou non substitués contenant des liaisons carbone-carbone insaturées non aromatiques, et (iii) les mélanges de (i) et (ii) ; en présence d'un catalyseur au platine choisi parmi les composés du platine et les complexes du platine et d'un accélérateur aldéhydique,
à condition que, si le composant insaturé (B) représente un alcène ayant au moins 4 atomes de carbone, le substituant R¹ de l'hydrure de silicium soit un groupe méthyle.

2. Procédé selon la revendication 1, où l'hydrure de silicium est choisi parmi le méthyldichlorosilane et le dichlorosilane.

3. Procédé selon la revendication 1, où le composant insaturé est choisi parmi le cyclohexène et le cyclopentène.

4. Procédé selon la revendication 1, où le composant insaturé est mis en contact avec un excès stoechiométrique d'hydrure de silicium de 0,1 à 10 %.

5. Procédé selon la revendication 1, où le catalyseur au platine est choisi dans le groupe consistant en l'acide chloroplatinique, l'acide chloroplatinique hexahydraté et les complexes de platine et de vinylsiloxane.

6. Procédé selon la revendication 1, où la concentration du catalyseur au platine est de 1 à 1000 mol de métal platine pour 1 x 10⁶ mol de liaisons carbone-carbone insaturées non aromatiques fournies au procédé par le composant insaturé.

7. Procédé selon la revendication 1, où la concentration de l'accélérateur aldéhydique est située dans un domaine de 0,01 à 20 % en masse par rapport à la masse du composant insaturé.

8. Procédé selon la revendication 1, où l'hydrure de silicium est mis en contact avec le composant insaturé à une température située dans un domaine de -10°C à 270°C.

9. Procédé selon la revendication 1, où l'accélérateur aldéhydique est choisi dans le groupe consistant en le mésitaldéhyde, le 9-anthaldéhyde, le 2-phénylproplonaldéhyde, le 2-naphtaldéhyde, le m-anisaldéhyde, le o-anisaldéhyde, le p-anisaldéhyde, le cyclohexane-carboxaldéhyde, l'amylcinnamaldéhyde, le 1,2,3,6-tétrahydrobenzal-déhyde, le benzaldéhyde, le 2,4-diméthoxybenzaldéhyde, le transcinnamaldéhyde, le o-, m- ou p-tolualdéhyde et l'octylaldéhyde.

10. Procédé selon la revendication 1, où l'hydrure de silicium est le méthyldichlorosilane, le composant insaturé est le cyclohexène, le catalyseur au platine est un complexe de platine et de vinylsiloxane et l'accélérateur aldéhydique est le benzaldéhyde.

11. Procédé selon la revendication 1, où l'hydrure de silicium est le dichlorosilane, le composant insaturé est le cyclopentène, le catalyseur au platine est un complexe de platine et de vinylsiloxane et l'accélérateur aldéhydique est le benzaldéhyde.

12. Procédé selon la revendication 1, où l'hydrure de silicium est un dihydrogénodihalogénosilane et le procédé est mis en oeuvre sous forme d'un procédé en deux étapes, la première étape étant à une température qui favorise la formation d'un produit de monoaddition par la réaction de l'hydrure de silicium et du composant insaturé et la seconde étape étant à une température plus élevée qui favorise la formation d'un produit de diaddition par la réaction de l'hydrure de silicium et du composant insaturé.
